# EUROPEAN PATENT APPLICATION

(11) **EP 4 674 576 A1**
(43) Date of publication of application: **07.01.2026**
(21) Application number: 23931486.7
(22) Date of filing: 07.04.2023
(51) Int. Cl.: B25J 9/16

(54) **OPERATION ROBOT, AND OPERATION MONITORING METHOD AND SYSTEM USING SAME**

(71) Applicant: Shenzhen Mammotion Innovation Co., Limited, Shenzhen, Guangdong 518000 (CN)
(72) Inventor: WEI, Jidong, Shenzhen, Guangdong 518000 (CN); WANG, Kai, Shenzhen, Guangdong 518000 (CN)
(74) Representative: Huang, Liwei
(86) International application number: PCT/CN2023/086890
(87) International publication number: WO 2024/207421

(57) **Abstract**

Embodiments of the present application disclose an abnormal area marking method and a related apparatus. The method includes: when a predicament is detected during an operation process, determining an area of a current position as an abnormal area; obtaining a sensing data set within a specified time period during the operation process, where the sensing data set is a set of data acquired by a sensor, and the specified time period represents a safe traveling time period before the robotic lawn mower gets into the predicament; determining abnormality description information of the abnormal area based on the sensing data set; and determining a target position corresponding to the abnormal area on an operation map, and establishing an association relationship between the target position and the abnormality description information. In this way, according to the method provided in the embodiments of the present application, the abnormal area is determined based on related information of an operation area of the robotic lawn mower that is obtained by a sensing apparatus, the abnormal area is marked, and an avoidance plan is designed for the abnormal area, thereby reducing the occurrence of overturning or stranding during the operation process of the robotic lawn mower, and improving the operation efficiency of the mowing robot.

## Description

### Technical Field

The present application relates to the field of robotics, and more particularly, to an operation robot and its operation monitoring method and system.

### Background Art

Robots, such as, for example, large lawnmowers, are generally recommended to be kept in a state of constant supervision to prevent the robot from becoming trapped or otherwise abnormal and causing harm to its surroundings or even to people when it is operating autonomously. This supervision scheme relies on the performance of the operator, and If the operator becomes inattentive or falls asleep, it will result in the robot being left unsupervised for an extended period, which is not in compliance with safety regulations.

### Summary

In view of the above, the present disclosure provides an operating robot and an operation monitoring method and system to solve the aforementioned technical problems.

According to a first aspect, the present disclosure provides an operation monitoring method, performed by a operating robot, the method comprising:
Transmitting, by the operating robot, a first interaction signal at a predetermined time interval, the first interaction signal includes first interaction information;
determining, by the operating robot, whether a second interaction signal is received within a preset time period after transmitting the first interaction signal, wherein the second interaction signal includes second interaction information;
verifying, by the operating robot upon receiving the second interaction signal, whether the first interaction information in the first interaction signal matches the second interaction information in the second interaction signal;
maintaining the operating robot in a first operational state when the when the first interaction information in the first interaction signal matches the second interaction information in the second interaction signal, the first operational state representing normal operation of the operating robot.

According to a second aspect, the present disclosure provides a operational robot, comprising :
A processor;
A memory, wherein the memory stores a computer program, and the memory executes the computer program to perform the steps of the operation monitoring method according to the first aspect.

According to a third aspect, the present disclosure provides an operation monitoring system for operating robot, comprises:
a control device and at least one operating robot, the operating robot is the operation robot described in the second aspect, the system is configured to:
Transmit, by the operating robot, a first interaction signal at a predetermined time interval, the first interaction signal includes first interaction information;
determine, by the operating robot, whether a second interaction signal is received within a preset time period after transmitting the first interaction signal, wherein the second interaction signal includes second interaction information;
verify, by the operating robot upon receiving the second interaction signal, whether the first interaction information in the first interaction signal matches the second interaction information in the second interaction signal;
maintain the operating robot in a first operational state when the first interaction information in the first interaction signal matches the second interaction information in the second interaction signal, the first operational state representing normal operation of the operating robot.

Accordingly, after the operation robot is activated by the operator, it autonomously begins operation according to a predetermined map. During autonomous operation, the operation robot periodically transmits a specific inspection signal, namely the first interaction signal, at predetermined inspection intervals. The operator can only accurately observe this signal if they are within a designated supervision distance from the operation robot and have an unobstructed line of sight.

Upon transmission of the inspection signal, the operator must generate a response command, i.e., the second interaction signal, via the control device within a short response time. If the operator fails to respond correctly, the operation robot will switch its operational state to ensure that the operator's attention remains focused on the robot. This mechanism prevents potential hazards that may arise when the operation robot operates without the operator's awareness, thereby enhancing the operator's attentiveness.

### Brief Description of the Drawings

To describe the technical solutions in embodiments of the present application or in the prior art more clearly, the following briefly describes the accompanying drawings required for describing the embodiments or the prior art. It is clear that the accompanying drawings in the following descriptions are merely some embodiments of the present application, and those of ordinary skill in the art may still derive other drawings from these accompanying drawings without creative efforts.
FIG. 1 is a schematic diagram of the module configuration of an operation robot in an embodiment of the present disclosure.
FIG. 2 is a schematic diagram of the module configuration of a control device in an embodiment of the present disclosure.
FIG. 3 is a schematic diagram illustrating the state in which an operator holds the control device to remotely control the operation robot.
FIG. 4 is a flowchart illustrating the operation monitoring method in the working state according to the first embodiment of the present disclosure.
FIG. 5 is a schematic diagram of the module configuration of an operation monitoring device in an embodiment of the present disclosure.

### Detailed Description of Embodiments

The following describes the technical solutions of the embodiments of the present application in a clear and complete manner with reference to the accompanying drawings. Clearly, the described embodiments are only part of the embodiments of the present application and not all of the embodiments.

Unless otherwise defined, all technical and scientific terms used herein have the meanings understood by those skilled in the relevant technical field. The terms used in this specification are for the purpose of describing specific embodiments and are not intended to limit the present application.

In the description of the present application, terms such as "first," "second," and similar terms are used to distinguish different objects, not to describe specific sequences. The terms "a," "an," or "the" used in the application do not limit the quantity but are meant to indicate the presence of at least one. The terms "include" or "comprise" and similar terms indicate that the elements or objects listed after these terms include the components or objects mentioned before these terms and their equivalents, but do not exclude other elements or objects. The term "connected" or similar terms are not limited to physical or mechanical connections but may also include electrical connections, whether direct or indirect.

In the description of this specification, the terms "embodiment," "specific embodiment," "example," etc., refer to specific features, structures, materials, or characteristics described in relation to at least one embodiment or example in the present application. The use of these terms does not necessarily refer to the same embodiment or example. Moreover, the specific features, structures, materials, or characteristics described can be combined in any appropriate manner in one or more embodiments or examples.

The following provides a detailed introduction to the hardware configurations of operating robot 1 and control device 2. After describing the hardware structure of operating robot 1 and control device 2, the operation monitoring method implemented in operating robot 1 will be comprehensively described.

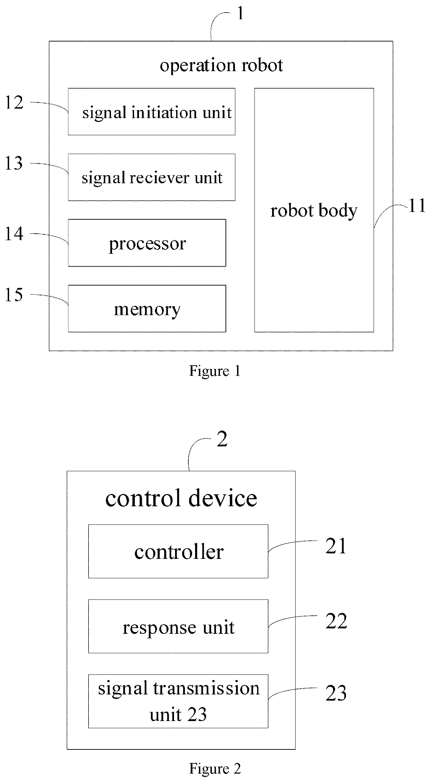

Referring to FIG. 1, which illustrates a schematic diagram of the operating robot 1 in an embodiment of the present disclosure, the operating robot 1 may include, but is not limited to, a semi-autonomous lawn mower, fully autonomous lawn mower, semi-autonomous agricultural machinery, or an autonomous drone. The operating robot 1 includes a robot body 11, a signal initiation unit 12, and a signal reciever unit 13, which are disposed on the robot body 11. The robot body 11 is configured to perform domain-specific tasks based on the robot type. For example, when the operating robot 1 is a lawn mower, the robot body 11 can perform the function of lawn mowing. When the operation robot 1 is a semi-autonomous agricultural machine, the robot body 11 can perform related agricultural functions, such as plowing, sowing, or harvesting. When the operation robot 1 is an autonomous drone, the robot body 11 can perform functions specific to drones, such as spraying pesticides.

Additionally, the operating robot 1 includes a processor 14 and a memory 15, with the processor 14 being electrically connected to the memory 15, signal initiation unit 12, and signal reciever unit 13. The processor 14 can be, but is not limited to, a general-purpose processor, digital signal processor, application-specific integrated circuit (ASIC), field-programmable gate array (FPGA), or other programmable logic devices, discrete logic gates, transistor logic devices, or discrete hardware components. The memory 15 can be, but is not limited to, random-access memory (RAM), flash memory, read-only memory (ROM), programmable read-only memory (PROM), electrically erasable programmable read-only memory (EEPROM), or other mature storage media in the field, such as registers.

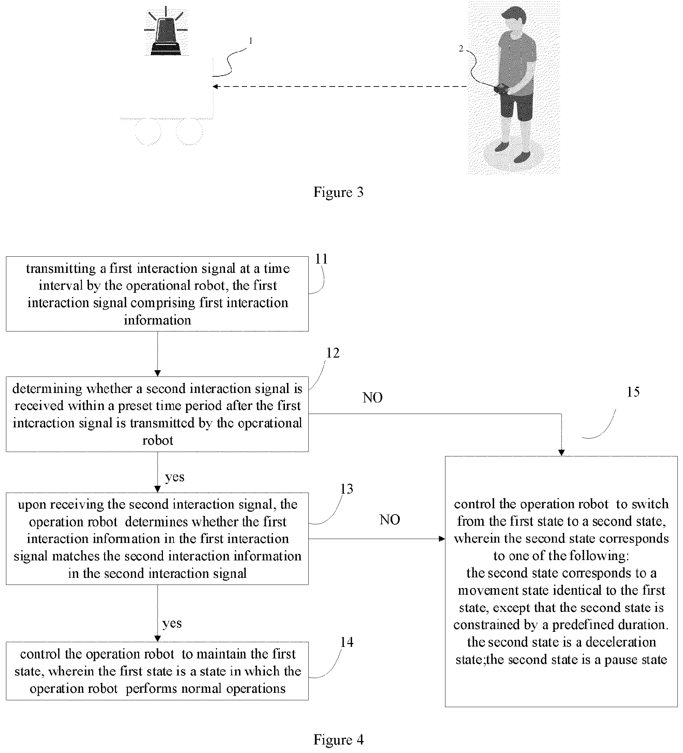

Referring to FIG. 2 and FIG. 3, FIG. 2 illustrates a schematic diagram of the control device 2 in an embodiment of the present disclosure, and FIG. 3 illustrates a schematic diagram showing the state of an operator holding the control device 2 to remotely control the operating robot 1. The control device 2 is configured to control the operation robot 1 to perform various corresponding operations. It is understood that the control device 2 can control the operation robot 1 by transmitting infrared signals, or the control device 2 can remotely control the operation robot 1 to perform corresponding operations through wireless or wired network communication with the operation robot 1.

The control device 2 comprises at least a controller 21, which can be, but is not limited to, a general-purpose processor, digital signal processor, application-specific integrated circuit (ASIC), field-programmable gate array (FPGA), or other programmable logic devices, discrete logic gates, transistor logic devices, or discrete hardware components. The control device 2 also comprises a response unit 22 and a signal transmission unit 23. The signal transmission unit 23 and the response unit 22 are electrically connected to the controller 21.

The response unit 22 can be, but is not limited to, a lighting unit, button unit, voice input unit, camera unit, or any other unit capable of providing operational input, or at least one of these options.

The lighting unit comprises at least one light-emitting element and at least one control switch. The light-emitting element can be, but is not limited to, an LED , infrared light, etc. The control switch controls the corresponding light-emitting element to emit light of different colors and/or different durations of light to generate corresponding visual information.

The button unit can be, but is not limited to, a mechanical button, a touch-sensitive button, or a virtual button displayed on the display of the control device 2. The button unit is configured to generate button trigger information upon actuation.

The voice input unit is configured to capture voice input information.

The camera unit is configured to acquire video input information.

In some embodiments, the response unit 22 can be configured to generate a second interaction signal by bundling one or more operations performed by the operator within a preset time period, or generate a second interaction signal for each operation performed by the operator. Therefore, a second interaction signal group consisting of multiple second interaction signals can be generated based on multiple operations by the operator within the preset time period. For example, when the response unit 22 is a button unit, the response unit 22 generates the second interaction signal in response to various pressing operations performed by the operator within the preset time period. When the response unit 22 is a lighting unit, the response unit 22 does not bundle the lighting and/or infrared signals generated within the preset time period, instead, the signal reciever unit 13 of the operating robot 1 individually collects these signals. In this case, the second interaction signal corresponds to the signal group collected by the signal reciever unit 13 of the operating robot 1 within the preset time period, and the signal transmission unit 23 may be omitted. In other embodiments, when the signal reciever unit 13 is a voice input unit and/or an imaging unit, the signal reciever unit 13 itself can collect voice signals and/or video signals. Since the signal reciever unit 13 directly acquires the operator's status feedback signals, the control device 2 may be omitted.

In other embodiments, when the signal reciever unit 13 is a voice input unit and/or a camera unit, the signal reciever unit 13 itself is capable of collecting voice signals and/or video signals. Since the operator's feedback signals can be collected through the signal reciever unit 13, the control device 2 can be omitted.

In some embodiments, when the signal transmission unit 23 is an infrared transmission unit, the signal reciever unit 13 is an infrared reception unit. The infrared transmission unit sends the second interaction signal to the operating robot 1, which receives the second interaction signal through the infrared reception unit.

In other embodiments, when a wireless or wired network connection is established between the operating robot 1 and the control device 2, it is understood that the wireless network can be, but is not limited to, short-range or long-range wireless networks. The short-range wireless network can be, but is not limited to, Wi-Fi or Bluetooth. The long-range wireless network may include, but is not limited to, cellular mobile networks. Similarly, the signal transmission unit 23 sends the second interaction signal to the operating robot 1, which receives the second interaction signal through the signal reciever unit 13. It is evident that any device capable of transmitting signals between the operating robot 1 and the control device 2 can serve as the signal transmission and reception device in this disclosure.

The following provides a detailed description of the operation monitoring scheme applied to the operating robot 1.

In some embodiments, the processor 14 controls the signal initiation unit 12 to transmit a first interaction signal at a predetermined time interval , the first interaction signal includes first interaction information. An operator observes the first interaction signal and performs a corresponding operation based on the first interaction information to generate a second interaction signal, the second interaction includes second interaction information. The processor 14 determines whether the second interaction signal is received within a preset time period after transmitting of the first interaction signal; when the signal reception unit 13 receives the second interaction signal, the processor 14 verifies whether the first interaction information in the first interaction signal matches the second interaction information in the second interaction signal; when the first interaction information matches the second interaction information, controls the operating robot 1 to maintain a first state, where the first state represents the normal operating state of the operating robot 1

Thus, after the operator starts the operating robot 1, the robot begins autonomous operation according to a preconfigured map. During the autonomous operation, the operating robot 1 periodically transmits a specific inspection signals-i.e., the first interaction signal-at predetermined inspection time interval. The operator can accurately observe the inspection signal only when located within a certain supervision distance of the operating robot 1 and maintaining an unobstructed visual line of sight to the operating robot 1.

Upon the operating robot 1 transmits the inspection signal, the operator is required to perform a corresponding operation within a constrained response time to generate a response command-i.e., the second interaction signal. If either operation inaccuracy or non-response occurs, This mechanism ensures that the operator's attention does not drift away from the work robot 1 for extended periods, preventing hazardous situations from occurring unnoticed and ultimately enhancing the operator's focus.

In some embodiments, the first interaction information and the second interaction information exhibit a bijective mapping function relationship. However, in other embodiments, this relationship is not limited to a one-to-one mapping but may also be one-to-many or many-to-one. For example, when the first interaction information is a red light flashing, the corresponding second interaction information may be either pressing the first button twice or pressing the third button twice. Similarly, if the first interaction information is a green light flashing or yellow light flashing, the corresponding second interaction information could be a single press of the second button. These examples are illustrative only. In practical implementations, the memory 15 of the work robot 1 stores a correlation lookup table that records predefined correlation relationships between robot-side interaction data and user-side interaction data.

In some embodiments, the second interaction signal is generated by the operator's operation of the control device 2. In specific embodiments, the signal initiation unit 12 is a lighting unit disposed on the robot body 11, while the response unit 22 is a mechanical button on the control device 2. The processor 14 controls the lighting unit to transmit the first interaction signal, which is a visual signal includes flash count and/or the illumination duration, For example, the processor 14 may control the lighting unit to flash three times at preset time intervals. In other embodiments, the processor 14 may control the lighting unit to flash a different number of times based on preset intervals. Alternatively, the lighting unit may flash at variable intervals, such as a 1-second gap between the first flash and second flash, a 3-second gap between the second flash and the third flash, and a 4-second gap between the third flash and the fourth flash. The second interaction signal is a button-triggering signal, includes button press counts and/or press durations. For instance, if the first interaction signal instructs the lighting unit to flash three times at preset intervals, the corresponding second interaction signal may require pressing the mechanical button three times at the same intervals.

It is important to note that the flash count and/or the illumination duration in the first interaction signal does not have to be numerically equal to the button press count and/or press duration in the second interaction signal, but must maintain a predefined corresponding relationship. For example: If the first interaction signal flashes three times, the second interaction signal may involve pressing the button three times, forming a direct correspondence. If the first interaction signal flashes twice, the corresponding second interaction signal may require four button presses. If the first interaction signal includes an illumination duration of 2 or 4 seconds, the corresponding second interaction signal may require a button press duration of 3 seconds. Regardless of the specific mappings, the first interaction signals and the second interaction signals maintain a predefined correspondence relationship.

Thus, by verifying the matching relationship between the flash count and/or illumination duration in the first interaction signal and button press count and/or press duration in the second interaction signal, the system can determine whether operator's attention is sufficiently engaged. This helps prevent hazardous situations where the operating robot 1 operates without the operator's awareness, ultimately enhancing the operator's focus.

In some embodiments, the first interaction signal may also include a visual signal with specific flashing colors. The corresponding second interaction signal can be a button-triggering signal that involves different buttons, button press counts, and/or button colors. For example: If the first interaction signal includes two flashes of a red light, the second interaction signal requires pressing the first button twice. If the first interaction signal includes of two flashes of a green light, the second interaction signal requires pressing the second button twice.

This ensures that different flashing colors in the visual signal correspond to distinct button-triggering signals, creating an additional layer of verification for operator attention.

In other embodiments, the signal initiation unit 12 may be a display unit. This display unit is oriented toward the operator, or the operator may adjust their position to face the display unit. The processor 14 controls the content displayed on the display unit, which serves as the first interaction signal-a visual signal that includes display content. Correspondingly, the response unit 22 is a mechanical buttons on the control device 2. The second interaction signal is a feedback signal containing button press count, press duration, voice commands, and/or gestures associated with the displayed content. The operator can only observe the content on the display unit when within a certain supervisory distance of the operating robot 1 and without any visual obstructions.

The display unit can prompt the operator to perform a corresponding response action. For example, the display unit may show: *"Please press the button three times within 5 seconds, ",* and initiate a countdown on the screen: 5, 4, 3, 2, 1. After seeing this prompt, the operator must press the mechanical button on the control device 2 three times within 5 seconds to generate the second interaction signal. The controller 21 then controls the signal transmission unit 23 to send this second interaction signal back to the operating robot 1, where the signal reception unit 13 receives it. The processor 14 determines whether a second interaction signal from the corresponding control device 2 is received within the preset time period after transmitting the first interaction signal. If the second signal is received, the processor 14 verifies whether the first interaction information in the first signal matches the second interaction information in the second signal. when the first interaction information matches the second interaction information, the processor 14 confirms that the operator using the control device 2 is in a normal working state. Consequently, the processor 14 controls the operating robot 1 to maintain the first state-normal operation.

Thus, by using the display unit enables the emission of the first interaction signal, versifying the signaling methods for operator interaction. This mechanism prevents hazardous conditions caused by unattended operation of the work robot 1 and achieves the technical objective of enhancing operator vigilance.

In some embodiments, the first interaction signal includes, but is not limited to, a visual signal comprising a number of flashing occurrences and/or a lighting duration, or a visual signal comprising display content. The first interaction signal may also be an auditory signal or other types of signals.

In some embodiments, the second interaction signal may also be a voice command, a gesture command, or the like.

In a specific embodiment, the content displayed by the display unit may include prompts such as "Please answer: 5 + 4 = ?" or "Please answer: What is the third character in the idiom " 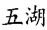 ? 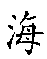 ". It should be understood that, in some embodiments, the control device may further include a microphone. The microphone collects the operator's voice information and generates a second interaction signal. The controller controls the signal transmission unit to transmit the second interaction signal back to the operational robot.

In some embodiments, the microphone of the control device 2 may be omitted. Instead, the signal reciever unit may include a microphone, which collects the operator's voice information and generates the second interaction signal. The second interaction signal is then transmitted to the processor 14. As a result, the steps involving transmission of the second interaction signal from the control device 2 to the operational robot 1 may be omitted.

In some embodiment, the content displayed by the display unit is "Please wave your hand left and right once while facing the camera." The signal reciever unit 13 further includes a camera, which is disposed on the main body of the robot and is oriented toward the operator. After sending the first interaction signal, the processor 14 controls the camera to begin rotating and recording the operator to generate the second interaction signal. The second interaction signal is then transmitted to the processor 14. The processor 14 determines the current working status of the operator based on the second interaction signal.

That is, in other embodiments, the second interaction signal is generated based on the voice information or physical movement information of the operator collected by the signal reciever unit of the operational robot 1.

In summary, when the control device is omitted, the first interaction information includes at least one type of visual information, such as the number of flashes and/or the duration of light illumination, and/or display content. The second interaction information includes at least one of the following types associated with the first interaction information:
voice collection information comprising voice content; and
video collection information comprising body movements.
The first interaction information and the second interaction information have a predefined correspondence.

When the operational robot is controlled via the control device, the first interaction information includes at least one of the following: visual information comprising at least one of a number of flashes and a lighting duration; display information comprising display content.

the second interaction information comprises at least one of the following associated with the first interaction information: the visual information comprising at least one of the number of light flashes and the duration of illumination; button trigger information comprising at least one of a number of key presses and a duration of key presses; the voice collection information comprising the voice content; and the video collection information comprising body movements; wherein a predetermined correspondence relationship exists between the first interaction information and the second interaction information.

Accordingly, the first interaction signal may be generated in various ways, and the second interaction signal may likewise be generated through multiple methods. The diversity of available approaches facilitates flexible device configuration and allows appropriate configurations to be selected based on different working conditions. Of course, the above-mentioned configurations may coexist, enabling the user to choose how to generate the first interaction signals and second interaction signals. It should be understood that one of the available methods may also be randomly selected at different times to generate the first interaction signal.

In addition, the interval period at which the processor controls the signal initiation unit to generate the first interaction signal may also vary.

In some embodiments, the processor controls the signal initiation unit to transmit the first interaction signal at irregular intervals. For example, after the signal initiation unit transmits the first interaction signal for the first time, the second transmission occurs after a 5-minute interval, the third transmission after a 10-minute interval, the fourth transmission after an 8-minute interval, and so forth.

Accordingly, by transmitting the first interaction signal at irregular intervals, the operator's attention can be further enhanced, thereby helping to prevent hazardous situations that may occur when the operational robot 1 operates without the operator's awareness, and ultimately achieving the purpose of improving operator attentiveness.

In some embodiments, the processor 14 is configured to increase the interval duration before generating the next first interaction signal when the first interaction information of a recently generated first interaction signal matches the second interaction information of a subsequently received second interaction signal.

The processor 14 is further configured to shorten the interval duration before generating the next first interaction signal when the first interaction information of a recently generated first interaction signal does not match the second interaction information of a subsequently received second interaction signal.

Accordingly, in the present disclosure, when the number of times the first interaction information in the first interaction signal matches the second interaction information in the second interaction signal increases, it indicates that the operator is in a good working condition. In this case, the processor 14 increases the interval duration before generating the next first interaction signal.

Conversely, when the number of mismatches between the first interaction information and the second interaction information increases, it indicates that the operator's working condition is relatively poor, and the processor 14 shortens the interval duration before generating the next first interaction signal.

In other words, the generation period of the first interaction signal can be dynamically adjusted based on the operator's working condition.

In some embodiments, the processor determining whether the operation robot receives a new second interaction signal within a preset duration, or the first interaction signal does not match the second interaction signal, controlling the operational robot to switch from the first state to a second state, wherein the second state is one of the following three conditions:

the second state corresponds to a movement state identical to the first state, except that the second state is constrained by a predefined duration.
the second state is a deceleration state;
the second state is a pause state.

The second state corresponds to a movement state identical to the first state, except that the second state is constrained by a predefined duration. for example, one minute. If the processor 14 does not receive a second interaction signal from the control device 2 matched to the operational robot 1 within this one-minute period, the operational robot 1 is controlled to shut down.
Since the second state is relatively safer than the first state, when it is determined that the first interaction signal does not match the second interaction signal, the system temporarily switches to the second state, thereby placing the operational robot 1 in a safer condition and reducing the risk of accidents.

In some embodiments, the processor 14 is configured to, after the operational robot transitions from the first state to the second state, determine whether the signal acquisition unit receives a new second interaction signal within a preset period of time.
If it is determined that the signal acquisition unit 13 has received a new second interaction signal within the preset time period, the processor 14 further determines whether the first interaction information included in the first interaction signal matches the second interaction information included in the subsequently received second interaction signal.

If a match is determined, the processor 14 controls the operational robot to switch from the second state back to the first state.

In some embodiments, when it is determined that the first interaction information contained in the first interaction signal does not match the second interaction information contained in the second interaction signal for a preset number of times, the processor 14 controls the operational robot 1 to switch to a third state, wherein the third state is a shutdown state.

The shutdown state is a locked state that requires manual activation to resume operation. The difference between the shutdown state and the pause state lies in the fact that although both states correspond to a non-moving condition, the pause state allows the operational robot 1 to automatically switch back to the first state when the first interaction signal and the second interaction signal are determined to match.

Accordingly, the operational robot does not immediately enter the shutdown state upon the first mismatch between the first interaction signal and the second interaction signal. Instead, it continues to receive and attempt to match newly received second interaction signals. Only when the number of mismatches reaches a preset threshold does the robot switch to the shutdown state, thereby avoiding unnecessary shutdowns caused by operator errors.

In some embodiments, the signal acquisition unit is configured to receive a first signal generated by the control device, wherein the first signal is generated when the control device is being held. The processor controls the operational robot to remain in the first state based on the first signal.

In some embodiments, the signal acquisition unit 13 is configured to receive a second signal generated by the control device 2, wherein the second signal is generated when the control device 2 is not being held. The processor 14 controls the operational robot 1 to switch from the first state to a second state or a third state based on the second signal. The second state is one of the following three conditions:
the second state corresponds to a movement state identical to the first state, except that the second state is constrained by a predefined duration;
the second state is a deceleration state;
the second state is a pause state.
and wherein the third state is a shutdown state.

Specifically, the control device 2 further includes a sensor electrically connected to the controller. The sensor is configured to detect whether the operator is holding the control device and to generate a first signal or a second signal accordingly. The first signal is generated when the control device is being held, and the second signal is generated when the control device is not being held. The controller 2 controls the signal transmission unit to send the first signal or the second signal to the operational robot. The processor 13 controls the operational robot 1 to continue operation based on the first signal and to change the operational state based on the second signal.

Specifically, the control device 2 further includes a sensor electrically connected to the controller. The sensor is configured to detect whether the operator is holding the control device 2 and to generate either a first signal or a second signal accordingly. The first signal is generated when the control device is being held, and the second signal is generated when the control device is not being held. The controller controls the signal transmission unit to transmit the first signal or the second signal to the operational robot 1. The processor 14 controls the operational robot 1 to continue operation based on the first signal, and to change its operational state based on the second signal.

Accordingly, if the operator is not holding the control device 2 outside of the normal random inspection cycle, it indicates an abnormal working condition of the operator, and the operational robot 1 is controlled to stop operating. Conversely, if the operator continues to hold the control device outside of the normal random inspection cycle, it indicates that the operator is in a normal working state, and the operational robot 1 is controlled to continue operating.

In some embodiments, the operational robot 1 further includes a start button disposed on the robot body 11. The start button is configured to generate a button trigger signal in response to a pressing operation performed by the operator. The processor 14 is configured to, when the operational robot 1 is in the second state or the third state, determine whether a button trigger signal has been generated. Upon determining that the button trigger signal has been generated, a start signal is generated. In response to the start signal, the operational robot is controlled to switch from the second state or the third state to the first state.

In some embodiments, the operational robot 1 further comprises a start button disposed on the robot body 11. The start button generates a press-trigger signal in response to a pressing operation by an operator. The processor 14 is configured to, when controlling the operational robot 1 to be in the second state or the third state, determine whether the operational robot 1 has generated the press-trigger signal. Upon determining that the operational robot 1 has generated the press-trigger signal, a start signal is generated. The operational robot 1, in response to the start signal, switches from the second state or the third state to the first state.

In some embodiments, the operational robot 1 further comprises a start button disposed on the robot body 11. The start button generates a press-trigger signal in response to a pressing operation by an operator. The processor 14 is configured to, determine whether the operational robot generates a start button trigger signal while being controlled in the second state or the third state; upon determining that the operational robot generates the start button trigger signal, generating a start signal;
and controlling the operational robot to switch from the second state or the third state to the first state in response to the start signal.
Upon determining that the operational robot 1 has generated the press-trigger signal, a start signal is generated. The operational robot 1, in response to the start signal, switches from the second state or the third state to the first state.

Accordingly, when the operational robot 1 is in the second state or the third state, the operator is required to physically approach the operational robot 1 and manually press the start button in order to return the robot to the first state for resuming normal operation. This mechanism serves as a reminder to the operator to remain attentive.

In some embodiments, the processor 14 is configured to determine a supervision distance between the operational robot 1 and the control device 2, and to adjust the signal strength of the first interaction signal based on the supervision distance.

Accordingly, the processor 14 is further configured to adjust the intensity of the first interaction signal based on the supervision distance between the operational robot 1 and the control device 2. That is, when the operational robot 1 has a higher safety level, the visibility of the first interaction signal can be enhanced to increase its effective range. For example, when the first interaction signal is a visual signal, the brightness of the visual signal may be increased so that operators at a greater distance can detect it in a timely manner. When the first interaction signal is display content, the font size of the display content may be enlarged to ensure visibility from a longer distance.

Conversely, when the operational robot 1 has a lower safety level, the visibility of the first interaction signal may be reduced. For example, if the first interaction signal is a visual signal, the brightness of the visual signal may be decreased so that only operators within a shorter distance can detect it. If the first interaction signal is display content, the font size of the display content may be reduced such that only nearby operators are able to notice it promptly.

In some embodiment, determining a separation distance between the operational robot and the control device; determining whether the separation distance exceeds the supervision distance;
and upon determining that the separation distance exceeds the supervision distance, controlling the operational robot to transition from the first state to a second state or a third state,
wherein the second state is one of the following three conditions:
   the second state corresponds to a movement state identical to the first state, except that the second state is constrained by a predefined duration;
   the second state is a deceleration state;
   the second state is a pause state;
   and wherein the third state is a shutdown state.

Accordingly, the supervision distance serves to ensure that the operator does not exceed the defined supervision range, thereby facilitating effective safety monitoring of the operational robot 1 by the operator.

In some embodiments, when the safety performance of the operational robot 1 exceeds a predetermined threshold, the processor 14 controls the operational robot 1 to remain in the first state during the period after transmitting the first interaction signal and while awaiting receipt of the second interaction signal; or, when the safety performance of the operational robot is less than or equal to the predetermined threshold, controlling the operational robot to switch from the first state to a second state during the process of sending the first interaction signal and waiting to receive the second interaction signal, wherein the second state is one of the following three conditions:
the second state corresponds to a movement state identical to the first state, except that the second state is constrained by a predefined duration;
the second state is a deceleration state;
the second state is a pause state;
and upon receiving the second interaction signal, and determining that the second interaction information in the second interaction signal matches the first interaction information in the first interaction signal, controlling the operational robot to switch from the current second state back to the first state.

Accordingly, under conditions of higher safety performance, the operational robot can continue to maintain the first state while awaiting the second interaction signal. Conversely, under conditions of lower safety performance, and in the absence of confirmation that the operator's working status is normal, the robot may switch to the second state to reduce operational risks and prevent a series of hazardous situations that may arise from poor operator performance.

In some embodiments, the processor 14 is configured to control the operational robot 1 and/or the control device 2 to emit a warning signal when the operational robot 1 switches to the second state or the third state.

Accordingly, this facilitates timely alerts to prompt the operator to increase attentiveness.

In some embodiments, the memory 15 stores an operation map, in which warning zones are identified. The warning zones may be automatically generated based on obstacle information obtained by the processor 14 during mapping, or may be added by a user on the map information (such as no-go zones). The processor 14 obtains a operation map by the operational robot, wherein the operation map identifies warning areas; and causes the operational robot to issue the first interaction signal and/or controls a corresponding warning module to emit a warning signal when approaching the warning areas. For example, the warning signal may include, but is not limited to, increasing the flashing frequency of the first interaction signal generated by the signal initiation unit 12, or controlling the operational robot 1's speaker to play a voice prompt such as "Entering warning zone, please exercise caution," thereby further reminding the operator to increase attentiveness. Accordingly, by enforcing the first interaction signal or issuing the warning signal, the user is compelled to focus on the current operating status of the operational robot 1, thereby ensuring heightened user attention in high-risk areas.

Refer to FIG. 4, which is a schematic flow diagram of an operation monitoring method for the working state according to an embodiment of the present application. The operation monitoring method is applied to the aforementioned operational robot 1, and the operation monitoring method comprises:
Step 11, transmitting a first interaction signal at a time interval by the operational robot, the first interaction signal comprising first interaction information;
Step 12, determining whether a second interaction signal is received within a preset time period after the first interaction signal is transmitted by the operational robot, the second interaction signal comprising second interaction information; If yes, proceed to Step 13; otherwise, proceed to Step 15.
Step 13: Upon receiving the second interaction signal, the operation robot 1 determines whether the first interaction information in the first interaction signal matches the second interaction information in the second interaction signal. If the first interaction information matches the second interaction signals match, proceed to Step 14; otherwise, proceed to Step 15.
Step 14: Control the operation robot 1 to maintain the first state, wherein the first state is a state in which the operation robot 1 performs normal operations.
Step 15: Control the operation robot 1 to switch from the first state to a second state, wherein the second state corresponds to one of the following:
   the second state corresponds to a movement state identical to the first state, except that the second state is constrained by a predefined duration.
   the second state is a deceleration state;
   the second state is a pause state.

Accordingly, after the operation robot 1 is activated by the operator, the operation robot 1 autonomously operates based on a predetermined map. During autonomous operation, the operation robot 1 periodically issues a specific inspection signal, namely the first interaction signal, at predefined inspection interval. The operator must be within a supervision distance from the operation robot 1 and have an unobstructed line of sight to accurately observe the signal. Upon emission of the inspection signal by the operation robot 1, the operator is required to perform a corresponding action within a short response time to generate a responsive command, namely the second interaction signal. If the operation is incorrect or not performed, the operation robot 1 will not remain in the first state. This mechanism ensures that the operator's attention is not diverted from the operation robot 1 for extended periods, thereby preventing potential hazards from occurring when the operator is not aware of the robot's condition, and ultimately serving the purpose of enhancing operator attentiveness.

In some embodiments, the operation robot 1 periodically emits a first interaction signal, wherein: the operation robot 1 generates the first interaction signal after a irregular time interval.

In some embodiments, the operation robot 1 generates the first interaction signal after a irregular time interval, comprises, increases the time interval for generating a next first interaction signal by the operation robot, in response to determine that the first interaction information in a recently generated first interaction signal matches the second interaction information in a subsequently received second interaction signal; and

When the first interaction information in a recently generated first interaction signal does not match the second interaction information in a subsequently received second interaction signal, the operation robot 1 shortens the interval duration for generating the next first interaction signal.

Accordingly, by generating the first interaction signals at irregular intervals, the operation robot 1 can further prompt the operator to stay attentive, thereby avoiding dangerous situations that may occur when the operation robot 1 is not properly monitored by the operator, and achieving the purpose of enhancing the operator's attentiveness. When the number of times the first interaction signal matches the subsequently received second interaction signal increases, it indicates that the operator is in a good working condition, and the interval duration for generating the next first interaction signal is correspondingly increased. Conversely, when the number of mismatches increases, it indicates that the operator's working condition is poor, and the interval duration for generating the next first interaction signal is shortened. In other words, the generation period of the first interaction signal can be adaptively adjusted based on the operator's working condition.

In some embodiments, when the control device 2 is omitted, the first interaction information comprises at least one type of visual information selected from a number of light flashes and a duration of light illumination, and/or the first interaction information comprises a display content, and the second interaction information comprises at least one of the following types of information associated with the first interaction information:
voice collection information comprising voice content; and
video collection information comprising body movements;
wherein the first interaction information and the second interaction information have a predefined correspondence.

When the operation robot 1 is controlled via the control device 2, the second interaction signal is generated by the control device 2 corresponding to the operation robot 1 based on the input operation of the operator. the first interaction information comprises at least one of:
the visual information comprising at least one of a number of light flashes and the duration of light illumination;
display information comprising the display content;
and the second interaction information comprises at least one of the following associated with the first interaction information:
   the visual information comprising at least one of the number of light flashes and the duration of illumination;
   button trigger information comprising at least one of a number of key presses and a duration of key presses;
   the voice collection information comprising the voice content; and
   the video collection information comprising body movements;
   wherein a predetermined correspondence relationship exists between the first interaction information and the second interaction information.

Accordingly, not only can the first interaction signal be generated in various ways, but the second interaction signal can also be generated through multiple methods. Such diversity enables flexible configuration of the devices and allows for the selection of appropriate configurations according to different working conditions. It should be understood that the above-mentioned configurations may coexist, allowing the user to select the preferred method for generating the first and second interaction signals. It is also conceivable that one of the methods for generating the first interaction signal may be randomly selected at different times.

In some embodiments, the operation monitoring method further comprises:
when the operational robot determines that the first interaction signal does not match the second interaction signal, controlling the operational robot to switch from the first state to a second state,
wherein the second state is one of the following three conditions:
   the second state corresponds to a movement state identical to the first state, except that the second state is constrained by a predefined duration.
   the second state is a deceleration state;
   the second state is a pause state.

Therefore, since the second state is safer compared to the first state, when it is determined that the first interaction signal does not match the second interaction signal, the operation robot may be temporarily switched to the second state. This enables the operation robot to enter a safer mode, thereby preventing potential accidents.

In some embodiments, the operation monitoring method further comprises: after the operational robot switches from the first state to the second state, determining whether the operation robot receives a new second interaction signal within a preset duration;
upon determining that the operational robot has received a new second interaction signal within the preset duration, determining whether the first interaction information in the first interaction signal matches the second interaction information in a subsequently received second interaction signal;
and, when the operation robot determines that the first interaction information in the first interaction signal matches the second interaction information in the subsequently received second interaction signal, controlling the operation robot to switch from the second state back to the first state.

In some embodiments, the operation monitoring method further comprises:
When it is determined that the first interaction information in the first interaction signal does not match the second interaction information in the received second interaction signal for a predetermined number of times, the operation robot is controlled to switch to a third state, wherein the third state is a shutdown state. The shutdown state is a locked state that requires manual activation. The difference between the shutdown state and the pause state lies in that both states are stationary, but the pause state allows the robot to automatically switch back to the first state when the first interaction signal matches the second interaction signal.

Therefore, the operation robot does not immediately enter the shutdown state upon the first mismatch between the first interaction signal and the second interaction signal. Instead, the system waits for a new second interaction signal and performs another matching attempt. The robot only enters the shutdown state when the received second interaction signals still fail to match the first interaction signal for a predetermined number of attempts. This approach reduces the probability of the robot being locked due to operational errors, such as incorrect button presses by the operator. Upon the first incorrect input, a new first interaction signal is immediately generated to prompt the operator for a new input. This process repeats, and the robot only enters the shutdown state after exceeding a certain number of failed attempts, thereby preventing unnecessary shutdowns caused by operational mistakes.

In some embodiments, the operation monitoring method further comprises:
the operational monitoring method further comprises:
receiving a first signal generated by the control device, wherein the first signal is generated when the control device is being held; and
maintaining the operational robot in the first state in response to the first signal.

In some embodiments, the operation monitoring method further comprises:
the operation monitoring method further comprises:
receiving a second signal generated by the control device 2, wherein the second signal is generated when the control device 2 is not being held;
and maintaining the operational robot 1 in a second state or a third state based on the second signal, wherein the second state is one of the following three conditions:
   the second state corresponds to a movement state identical to the first state, except that the second state is constrained by a predefined duration.
   the second state is a deceleration state;
   the second state is a pause state.
   and wherein the third state is a shutdown state.

Accordingly, when the operator does not hold the control device 2 outside of the regular inspection cycle, it indicates that the operator's current working status is abnormal, and the operation robot 1 is controlled to stop operation. Conversely, when the operator continues to hold the control device 2 outside of the regular inspection cycle, it indicates that the operator's current working status is normal, and the operation robot 1 is controlled to continue operation.

In some embodiments, the operation monitoring method further comprises:
the operation monitoring method further comprises:
receiving a second signal generated by the control device, wherein the second signal is generated when the control device is not being held;
and maintaining the operational robot in a second state or a third state based on the second signal,
wherein the second state is one of the following three conditions:
   the second state corresponds to a movement state identical to the first state, except that the second state is constrained by a predefined duration.
   the second state is a deceleration state;
   the second state is a pause state.
   and wherein the third state is a shutdown state.

In some embodiments, the operation monitoring method further comprises:
determining whether the operational robot generates a start button trigger signal while being controlled in the second state or the third state;
upon determining that the operational robot generates the start button trigger signal, generating a start signal;
and controlling the operational robot to switch from the second state or the third state to the first state in response to the start signal.

In some embodiments, the operation monitoring method further comprises:
determining a supervision distance between the operational robot and the control device;
and adjusting the signal strength of the first interaction signal based on the supervision distance.

Accordingly, the intensity of the first interaction signal is adjusted based on the supervision distance between the operation robot 1 and the control device 2. That is, when the safety level of the operation robot 1 is relatively high, the visibility of the first interaction signal can be enhanced to increase its propagation range. For example, when the first interaction signal is a visual signal, the brightness of the visual signal can be increased so that the operator at a farther distance can also detect it in time. When the first interaction signal is display content, the font size of the display content can be enlarged so that the operator at a farther distance can also perceive it in time. Conversely, when the safety level of the operation robot 1 is relatively low, the visibility of the first interaction signal can be reduced. For example, when the first interaction signal is a visual signal, the brightness of the visual signal can be reduced so that only operators at a closer distance can detect it in time. When the first interaction signal is display content, the font size of the display content can be reduced so that only operators at a closer distance are able to perceive it in time.

In some embodiments, the operation monitoring method further comprises:
determining a separation distance between the operational robot and the control device;
determining whether the separation distance exceeds the supervision distance;
and upon determining that the separation distance exceeds the supervision distance, controlling the operational robot to transition from the first state to a second state or a third state, wherein the second state is one of the following three conditions:
   the second state corresponds to a movement state identical to the first state, except that the second state is constrained by a predefined duration;
   the second state is a deceleration state;
   the second state is a pause state;
   and wherein the third state is a shutdown state.

Therefore, the operation personnel can be monitored to ensure that they do not exceed the supervision distance, thereby facilitating the safe supervision of the operation robot 1 by the operation personnel.

In some embodiments, the operation monitoring method further comprises:
when a safety performance of the operational robot is greater than a predetermined threshold, controlling the operational robot 1 to maintain the first state during the process of sending the first interaction signal and waiting to receive the second interaction signal; or,
when the safety performance of the operational robot 1 is less than or equal to the predetermined threshold, controlling the operational robot 1 to switch from the first state to a second state during the process of sending the first interaction signal and waiting to receive the second interaction signal,
wherein the second state is one of the following three conditions:
   the second state corresponds to a movement state identical to the first state, except that the second state is constrained by a predefined duration;
   the second state is a deceleration state;
   the second state is a pause state;
   and upon receiving the second interaction signal, and determining that the second interaction information in the second interaction signal matches the first interaction information in the first interaction signal, controlling the operational robot to switch from the current second state back to the first state.

Therefore, in scenarios where the safety performance is relatively high, the first state can be maintained during the waiting period for the second interaction signal. In contrast, when the safety performance is relatively low and the working status of the operator has not been confirmed to be normal, the system may switch to the second state to reduce operational risks and prevent a series of hazardous situations caused by the operator's poor working condition.

In some embodiments, the operation monitoring method further comprises:
When the operation robot 1 switches to the second state or the third state, the operation robot 1 and/or the control device 2 is controlled to send a warning signal.

As a result, the operator can be promptly reminded to increase their level of attention.

In some embodiments, the operation monitoring method further comprises:
obtaining a operation map by the operational robot 1, wherein the operation map identifies warning areas;
and causing the operational robot 1 to send the first interaction signal and/or a warning signal when approaching the warning area; For example, the warning signal may include, but is not limited to, increasing the flashing frequency of the first interaction signal generated by the signal initiating unit 12, or controlling a speaker of the operation robot 1 to play a voice prompt such as "You have entered a warning area, please stay alert," so as to further remind the operator to enhance attention.

The present disclosure further provides a computer-readable storage medium, where the computer-readable storage medium stores a computer program which, when executed by a computer, causes the computer to perform some or all of the steps of any of the operation monitoring methods described in the above method embodiments.

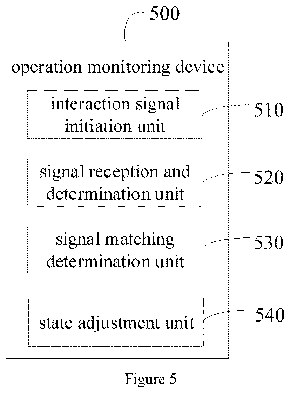

Please refer to FIG. 5, which is a schematic diagram of a module of an operation monitoring device according to an embodiment of the present disclosure.

The operation monitoring device 500 includes:
Interaction signal initiation unit 510, configured to transmit a first interaction signal at a time interval by the operational robot, the first interaction signal comprising first interaction information;
Signal reception and determination unit 520, configured to whether a second interaction signal is received within a preset time period after the first interaction signal is transmitted by the operational robot, the second interaction signal comprising second interaction information;
Signal matching determination unit 530, configured to determine, upon receiving the second interaction signal, whether the first interaction information within the first interaction signal matches the second interaction information within the second interaction signal;
State adjustment unit 540, configured to:
   control the operation robot 1 to maintain a first state when it is determined that the first interaction information within the first interaction signal matches the second interaction information within the second interaction signal, wherein the first state is the normal operating state of the operation robot 1; and
   control the operation robot 1 to switch from the first state to a second state when it is determined that the first interaction signal does not match the second interaction signal, wherein the second state is one of the following three:
   the second state having the same motion state as the first state but with a preset duration;
   a deceleration state; or
   a pause state.

In some embodiments, the state adjustment unit 540 is further configured to, when determining that no second interaction signal is received within the preset time period after the first interaction signal is emitted, or that the first interaction information of the first interaction signal does not match the second interaction information of the second interaction signal, determine that the working status of the operator holding the control device 2 is abnormal, and accordingly control the operation robot 1 to switch from the first state to the second state, wherein the second state is one of the following three:

the second state having the same motion state as the first state but with a preset duration;
a deceleration state; or
a pause state.

Wherein the second state has the same motion state as the first state but with a preset duration.

It should be noted that, for ease of description, the foregoing method embodiments are described as a sequence of actions. However, those skilled in the art will appreciate that the present application is not limited to the sequence of actions described. Certain steps may be performed in a different order or concurrently. Furthermore, those skilled in the art will also understand that the embodiments described in the specification are optional implementations, and the actions and modules involved are not necessarily essential to the present application.

The memory 15 may include, for example, a flash drive, Read-Only Memory (ROM), Random Access Memory (RAM), magnetic disk, optical disk, or other similar storage media. The processor 14 may be a general-purpose processor, a digital signal processor (DSP), an application-specific integrated circuit (ASIC), a field-programmable gate array (FPGA) or other programmable logic devices, discrete gate or transistor logic, or discrete hardware components. The processor may implement or execute the methods, steps, and logic blocks disclosed in the embodiments of the present invention. The processor may be an image processor, a microprocessor, or any other conventional processor.

The steps of the method disclosed in the embodiments of the present invention may be implemented by hardware decoding logic executed by the processor, or by a combination of hardware and software modules within the processor. The software modules may reside in storage media such as RAM, flash memory, ROM, programmable ROM (PROM), electrically erasable programmable ROM (EEPROM), registers, or other known storage media in the art. These storage media may reside in the memory. For example, the processor 14 may read an application program, computer instructions, or data from the memory and perform the method steps in conjunction with the hardware.

The foregoing description merely illustrates the preferred embodiments of the present application and is not intended to limit the scope thereof. It should be understood by those of ordinary skill in the art that various modifications and improvements may be made without departing from the spirit and scope of the present invention. All such variations and improvements shall fall within the scope of protection of the present application.

## Claims

1. A operation monitoring method, performed by an operational robot, the operation monitoring method comprising:
transmitting a first interaction signal at a time interval by the operational robot, the first interaction signal comprising first interaction information;
determining whether a second interaction signal is received within a preset time period after the first interaction signal is transmitted by the operational robot, the second interaction signal comprising second interaction information;
in response to determining that the first interaction information matches the second interaction information, controlling, by the operation robot, the operational robot to maintain a first state, wherein in the first state the operational robot operates normally.

2. The operation monitoring method according to claim 1, wherein the transmitting the first interaction signal at a time interval by the operational robot comprises:
generating the first interaction signal by the operational robot after an irregular time interval.

3. The operation monitoring method according to claim 2, wherein the generating the first interaction signal by the operational robot after the irregular time interval, comprising:
increasing, by the operation robot, a time interval for generating a next first interaction signal , in response to determining that the first interaction information in a recently generated first interaction signal matches the second interaction information in a subsequently received second interaction signal; and
decreasing, by the operation robot, a time interval for generating a next first interaction signal , in response to determining that the first interaction information in a recently generated first interaction signal does not match the second interaction information in a subsequently received second interaction signal.

4. The operation monitoring method according to any one of claims 1 to 3, wherein the first interaction information comprises at least one type of visual information selected from a number of light flashes and a duration of light illumination, and/or
the first interaction information comprises a display content, and the second interaction information comprises at least one of the following types of information associated with the first interaction information:
voice collection information comprising voice content; and
video collection information comprising body movements;
wherein the first interaction information and the second interaction information have a predefined correspondence.

5. The operation monitoring method according to any claims 1 to 3, wherein the second interaction signal is generated by a control device corresponding to the operational robot, based on an input operation performed by an operator.

6. The operation monitoring method according to claim 5, wherein the first interaction information comprises at least one of the following:
the visual information comprising at least one of a number of light flashes and the duration of light illumination;
display information comprising the display content;
and the second interaction information comprises at least one of the following associated with the first interaction information:
the visual information comprising at least one of the number of light flashes and the duration of illumination;
button trigger information comprising at least one of a number of key presses and a duration of key presses;
the voice collection information comprising the voice content; and
the video collection information comprising body movements;
wherein a predetermined correspondence relationship exists between the first interaction information and the second interaction information.

7. The operation monitoring method according to any one of claims 1 to 6,wherein the operation monitoring method further comprises:
when the operational robot determines that the first interaction signal does not match the second interaction signal, controlling the operational robot to switch from the first state to a second state,
wherein the second state is one of the following three conditions:
the second state corresponds to a movement state identical to the first state, except that the second state is constrained by a predefined duration;
the second state is a deceleration state;
the second state is a pause state.

8. The operation monitoring method according to claim 7, wherein the operation monitoring method further comprises:
after the operational robot switches from the first state to the second state, determining whether the operation robot subsequently receives a new second interaction signal within a preset duration;
upon determining that the operational robot has subsequently received a new second interaction signal within the preset duration, determining whether the first interaction information in the first interaction signal matches the second interaction information in the subsequently received second interaction signal;
and, when the operation robot determines that the first interaction information in the first interaction signal matches the second interaction information in the subsequently received second interaction signal, controlling the operation robot to switch from the second state back to the first state.

9. The operation monitoring method according to claim 8, wherein the operation monitoring method further comprises:
controlling the operation robot to switch to a third state, wherein the third state is a shutdown state, when the operational robot determines that the first interaction information in the first interaction signal does not match the second interaction information in the second interaction signals received for a predetermined number of times.

10. The operation monitoring method according to claim 1, wherein the operational monitoring method further comprises:
receiving a first signal generated by the control device, wherein the first signal is generated when the control device is being held; and
maintaining the operational robot in the first state in response to the first signal.

11. The operation monitoring method according to claim 10, wherein the operation monitoring method further comprises:
receiving a second signal generated by the control device, wherein the second signal is generated when the control device is not being held;
and maintaining the operational robot in a second state or a third state based on the second signal, wherein the second state is one of the following three conditions:
the second state corresponds to a movement state identical to the first state, except that the second state is constrained by a predefined duration;
the second state is a deceleration state;
the second state is a pause state.
and wherein the third state is a shutdown state.

12. The operation monitoring method according to any one of claims 7, 9, or 11, wherein the operational monitoring method further comprises:
determining whether the operational robot generates a start button trigger signal while being controlled in the second state or the third state;
upon determining that the operational robot generates the start button trigger signal, generating a start signal;
and controlling the operational robot to switch from the second state or the third state to the first state in response to the start signal.

13. The operation monitoring method according to claim 1, wherein the operation monitoring method further comprises:
determining a supervision distance between the operational robot and the control device;
and adjusting the signal strength of the first interaction signal based on the supervision distance.

14. The operation monitoring method according to claim 13, wherein the operation monitoring method further comprises:
determining a separation distance between the operational robot and the control device;
determining whether the separation distance exceeds the supervision distance;
and upon determining that the separation distance exceeds the supervision distance, controlling the operational robot to transition from the first state to a second state or a third state,
wherein the second state is one of the following three conditions:
the second state corresponds to a movement state identical to the first state, except that the second state is constrained by a predefined duration;
the second state is a deceleration state;
the second state is a pause state;
and wherein the third state is a shutdown state.

15. The operation monitoring method according to claim 1, wherein the operation monitoring method further comprises:
when a safety performance of the operational robot is greater than a predetermined threshold, controlling the operational robot to maintain the first state during the process of sending the first interaction signal and waiting to receive the second interaction signal;
or,
when the safety performance of the operational robot is less than or equal to the predetermined threshold, controlling the operational robot to switch from the first state to a second state during the process of sending the first interaction signal and waiting to receive the second interaction signal, wherein the second state is one of the following three conditions:
the second state corresponds to a movement state identical to the first state, with the exception that the second state is constrained by a predefined duration;
the second state is a deceleration state;
the second state is a pause state;
and upon receiving the second interaction signal, and determining that the second interaction information in the second interaction signal matches the first interaction information in the first interaction signal, controlling the operational robot to switch from the current second state back to the first state.

16. The operation monitoring method according to any one of claims 7, 11, or 15, wherein the operational monitoring method further comprises:
controlling the operational robot and/or the control device to issue a warning signal when the operational robot switches to the second state or the third state.

17. The operation monitoring method according to any one of claims 1 to 16, wherein the operation monitoring method further comprises:
obtaining a operation map by the operational robot, wherein the operation map identifies warning areas; and causing the operational robot to issue the first interaction signal and/or a warning signal when approaching the warning areas.

18. An operational robot, comprising:
a processor; and
a memory storing a computer program, wherein the processor is configured to execute the computer program to perform the steps of the operation monitoring method according to any one of claims 1 to 17.

19. The operational robot according to claim 18, wherein the operational robot is a semi-automatic lawn mowing robot, a fully automatic lawn mowing robot, a semi-automatic agricultural machine, or an autonomous unmanned aerial vehicle.

20. An operation monitoring system for an operational robot, comprising a control device and at least one operational robot, wherein the operational robot is the operational robot according to claim 18. or 19, wherein the operational robot is configured to transmit a first interaction signal at a predetermined intervals, the first interaction signal comprising a first interaction information;
determine, within a preset time period after transmitting the first interaction signal, whether a second interaction signal is received from the control device associated with the operational robot, the second interaction signal including second interaction information;
determine whether the first interaction information in the first interaction signal matches the second interaction information in the second interaction signal upon receiving the second interaction signal;
and, upon determining that the first interaction information matches the second interaction information, control the operational robot to maintain a first state wherein the first state is a normal operating state of the operational robot.
